**Europäisches Patentamt**

**European Patent Office**

**Office européen des brevets**

(11) Veröffentlichungsnummer: **0 577 641 B1**

(12) **EUROPÄISCHE PATENTSCHRIFT**

(45) Veröffentlichungstag der Patentschrift: **15.03.95**

(51) Int. Cl.⁶: **B60T 8/88**

(21) Anmeldenummer: **92906673.6**

(22) Anmeldetag: **19.03.92**

(86) Internationale Anmeldenummer:
**PCT/EP92/00600**

(87) Internationale Veröffentlichungsnummer:
**WO 92/17358 (15.10.92 92/26)**

(54) **SCHALTUNGSANORDNUNG FÜR EINEN REGLER.**

(30) Priorität: **30.03.91 DE 4110497**
**25.05.91 DE 4117099**

(43) Veröffentlichungstag der Anmeldung:
**12.01.94 Patentblatt 94/02**

(45) Bekanntmachung des Hinweises auf die
Patenterteilung:
**15.03.95 Patentblatt 95/11**

(84) Benannte Vertragsstaaten:
**DE FR GB**

(56) Entgegenhaltungen:
**EP-A- 179 194          EP-A- 214 921**
**DE-A- 3 234 630        DE-A- 3 512 110**
**DE-A- 3 924 988        US-A- 3 911 392**

(73) Patentinhaber: **ITT Automotive Europe GmbH**
**Guerickestrasse 7**
**D-60488 Frankfurt (DE)**

(72) Erfinder: **FEY, Wolfgang**
**Raugrafenstrasse 8**
**D-6501 Wörrstadt (DE)**
Erfinder: **ZYDEK, Michael**
**Kurmainzer Strasse 40**
**6230 Frankfurt/Main (DE)**

(74) Vertreter: **Blum, Klaus-Dieter, Dipl.-Ing.**
**c/o ITT Automotive Europe GmbH**
**Guerickestrasse 7**
**D-60486 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltungsanordnung für einen elektronischen Regler, insbesondere für den Regler einer Bremsanlage mit elektronischer Blockierschutzund/oder Antriebsschlupfregelung, mit einem Überwachungsschaltkreis, der beim Erkennen eines Defektes, einer Fehlfunktion, fehlerhafter Stromversorgung oder dergl., von dem Regler angesteuerte Betätigungselemente, wie Stellglieder oder Magnetventile einer elektronisch geregelten Bremsanlage, in ihrer Ruhelage hält oder in die Ruhelage zurückstellt, wobei beim Einschalten des Reglers zur Stromversorgung der Betätigungselemente ein Relaiskontakt eines Stromversorgungsrelais geschlossen wird.

Aus Sicherheitsgründen werden Bremsanlagen mit elektronischer Blockierschutz- oder Antriebsschlupfregelung derart ausgelegt, daß bei einem Defekt in der Elektronik oder bei Stromausfall die Magnetventile des Bremsensystems eine Ruhelage einnehmen, in der die volle Bremswirkung, wenn auch ungeregelt, gewährleistet ist. Die Elektronik darf auf keinen Fall infolge einer Fehlfunktion oder eines Stromausfalls zum Ausfall des Bremsensystems führen. Um dies zu erreichen, ist der Antiblockierregler nach der DE-PS 26 12 356 mit einer Überwachungsschaltung ausgerüstet, die beim Auftreten eines Fehlers in der Elektronik ein Stromversorgungsrelais abschaltet. Da über einen Arbeitskontakt dieses Relais auch die Magnetventile des Antiblockierreglers angeschlossen sind, werden in diesem Fehlerfall die Magnetventile in ihre Ruhelage zurückgestellt oder in ihrer Ruhelage gehalten. Bis zur Behebung des Fehlers ist dann nur noch ein konventionelles Bremsen möglich, wobei sichergestellt ist, daß die Ventile keinen nachteiligen Einfluß auf die Bremsenfunktion haben können. Diese bekannte Überwachungsschaltung ist weitgehend eigensicher ausgebildet, so daß sowohl ein Fehler in der Blockierschutzelektronik, als auch in der Überwachungsschaltung zum Abschalten des Stromversorgungsrelais führt.

Nach der DE-OS 32 34 637 wird auf grundsätzlich gleiche Weise, nämlich durch Abschalten der Stromversorgung für die Magnetventile, die Aufrechterhaltung des konventionellen Bremsensystems im Falle eines Fehlers in der Elektronik sichergestellt.

Des weiteren ist es aus der DE-OS 39 24 988 bekannt, ein Stromversorgungsrelais, über dessen Arbeitskontakt die Magnetventile eines Antiblockiersystems an die Batterie angeschlossen sind, über zwei in Serie geschaltete Transistoren einzuschalten. Mit einer Prüfschaltung wird erkannt, wenn eine der beiden Transistoren defekt wird, und daraufhin das Stromversorgungsrelais abgeschaltet.

Es ist nun Aufgabe der vorliegenden Erfindung, eine Schaltungsanordnung für einen elektronischen Regler derart auszulegen, daß Fehler unterschiedlicher Art frühzeitig festgestellt werden. Das Erkennen eines Fehlers soll mit hoher Zuverlässigkeit zum Abschalten des Reglers führen, um eine Gefährdung des von dem Regler gesteuerten Systems, z.B. einer Kraftfahrzeug-Bremsanlage, durch einen nicht rechtzeitig erkannten Reglerdefekt zu vermeiden.

Es hat sich herausgestellt, daß diese Aufgabe durch eine Weiterbildung einer Schaltungsanordnung der eingangs genannten Art gelöst werden kann, deren Besonderheit darin besteht, daß der Überwachungsschaltkreis beim Einschalten des Reglers vor dem Schließen des Relaiskontaktes zunächst den Anschluß des Relais an die Stromzuführung und die Offen- bzw. Trennstellung des Relaiskontaktes überprüft, anschließend das Stromversorgungsrelais ansteuert und nach dem Überprüfen der über den geschlossenen Relaiskontakt zugeführten Versorgungsspannung ein Freigabesignal für den Regler und/oder für die Ansteuerung der Betätigungselemente auslöst.

Mit der erfindungsgemäßen Schaltungsanordnung wird sichergestellt, daß die Magnetventile oder andere Betätigungselemente tatsächlich nur dann angesteuert werden können, wenn die überprüften Bauelemente, Funktionen und Spannungspegel fehlerfrei sind. Es werden auch Fehler erkannt, z.B. "klebender" Arbeitskontakt des Stromversorgungsrelais, die bisher nicht festgestellt werden konnten. Die redundante Sperrung der Ventilbetätigung durch Abfall des Stromversorgungsrelais und Wegfall des Freigabesignals stellt sicher, daß auch beim Auftreten sogen. Doppelfehler die Regelung abgeschaltet wird und damit sicherheitskritische Fehlfunktionen, wie sie z.B. bei elektronisch geregelten Bremssystemen auftreten könnten, vermieden werden.

Nach einer vorteilhaften Ausführungsart der Erfindung steuert der Überwachungsschaltkreis einen Transistor an, über den das Stromversorgungsrelais eingeschaltet wird, wobei nach dem Einschalten des Reglers zunächst durch Sperrung der Transitoransteuerung die Sperrfunktion des Transistors überprüft wird. Ferner ist es in vielen Fällen vorteilhaft, wenn der Überwachungsschaltkreis vor oder nach dem Auslösen des Freigabesignals die Höhe der über den Relaiskontakt zugeführten Versorgungsspannung überprüft und das Stromversorgungsrelais abschaltet und/oder das Freigabesignal löscht, sobald die Versorgungsspannung einen oberen oder einen unteren Grenzwert über- bzw. unterschreitet. Eine Beschränkung auf eine reine Überspannungsüberwachung ist ebenfalls möglich.

Nach einem weiteren Ausführungsbeispiel der Erfindung überwacht der Überwachungsschaltkreis gleichzeitig weitere Schaltkreise des Reglers, die bei ordnungsgemäßer Funktion bestimmte Dauersignale oder Wechselsignale vorgegebener Frequenz abgeben. Beispielsweise liegt das Ausgangssignal sogen. "watch-dog"-Schaltkreise, wenn alles in Ordnung ist, in Form eines Wechselsignals bestimmter Frequenz vor. Erkennt der Überwachungsschaltkreis eine Störung, schaltet er das Stromversorgungsrelais ab und/oder löscht das Freigabesignal.

Schließlich ist es nach einer Ausführungsart der Erfindung noch vorgesehen, die über dem Relais-Ansteuertransistor nach dem "Einschalten" des Relais abfallende Spannung zu überwachen. Der Überwachungsschaltkreis spricht an, sobald diese Spannung einen Maximalwert überschreitet.

Weitere Merkmale, Vorteile und Anwendungsmöglichkeiten der Erfindung gehen aus der folgenden Beschreibung eines Ausführungsbeispiels anhand der beigefügten Schaltungen und des Flußdiagramms hervor.

Es zeigen

Fig. 1 im Blockschaltbild und vereinfacht die wichtigsten Komponenten einer Schaltungsanordnung nach der Erfindung in Verbindung mit einer nur teilweise dargestellten Reglerschaltung,

Fig. 2 im Flußdiagramm einen Einschaltvorgang bei Verwendung der Schaltungsanordnung nach Fig. 1 und

Fig. 3 ein Ausführungsbeispiel der Schaltungsanordnung nach Fig. 1.

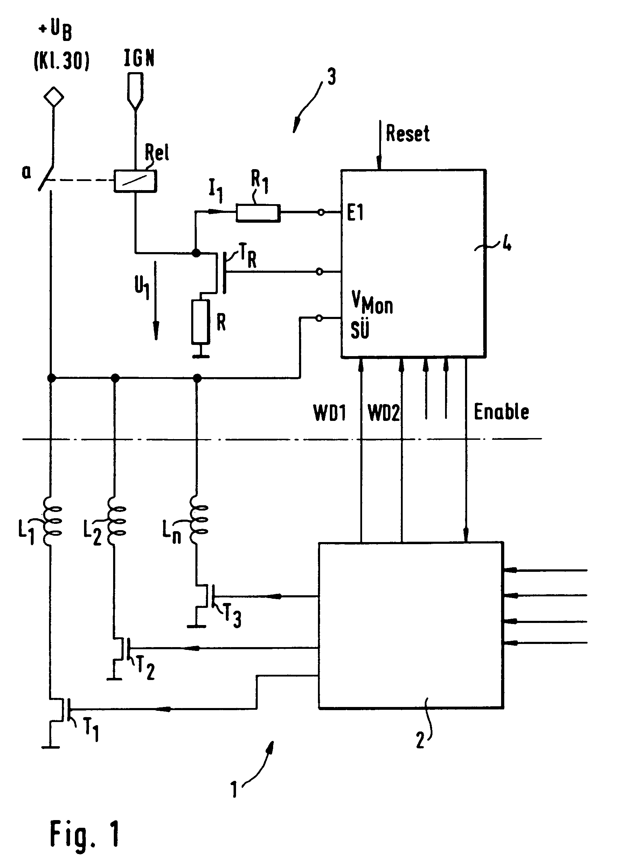

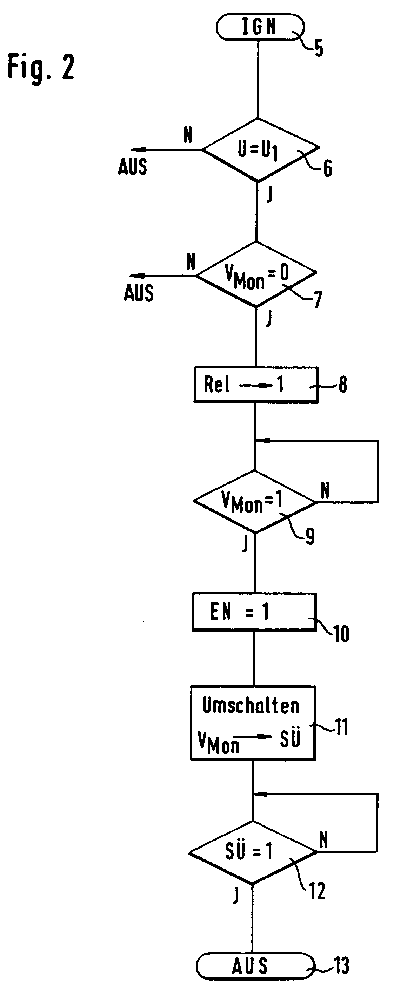

Den prinzipiellen Aufbau und die Arbeitsweise einer Schaltungsanordnung nach der Erfindung veranschaulicht das Blockschaltbild nach Fig. 1 in Verbindung mit dem Flußdiagramm nach Fig. 2.

Von einem elektronischen Regler 1, der durch die erfindungsgemäße Schaltungsanordnung 3 ergänzt wird, sind in Fig. 1 lediglich die Erregerspulen $L_1$, $L_2$...$L_n$ einiger Betätigungselemente, die zugehörigen Treiberstufen $T_1$,$T_2$...$T_n$ und deren Ansteuerschaltung 2 angedeutet. Es handelt sich hierbei beispielsweise um die Betätigungsspulen $L_1$,$L_2$... $L_n$ der Magnetventile in den Bremsleitungen einer blockiergeschützten Bremsanlage. Die für eine solche Bremsanlage außerdem noch benötigten Radsensoren, die zugehörigen elektronischen Schaltkreise oder Microcomputer zur Verarbeitung der Signale und zur Erzeugung von Bremsdrucksteuersignalen, die schließlich der Ansteuerschaltung 2 des Reglers 1 zugeführt werden, sind nicht dargestellt. Bekanntlich könnte die Ansteuerung der Magnetventile eines geregelten Bremsensystems, z.B. eines ABS, zu gefährlichen Situationen führen, wenn durch eine Fehlfunktion der Elektronik die Bremsenwirkung gemindert würde. Die in ihrer Gesamtheit mit 3 bezeichnete Schaltungsanordnung nach der Erfindung schließt eine solche Gefahr aus, indem sie beim Erkennen eines Fehlers oder einer Fehlfunktion eine Betätigung der Magnetventile des Reglers 1 unterbindet.

Die Schaltungsanordnung 3 nach Fig. 1 besteht im wesentlichen aus einem Überwachungsschaltkreis 4, einem Schalttransistor $T_R$ und einem Stromversorgungsrelais Rel, das mit einem Arbeitskontakt a ausgerüstet ist, über den die Magnetventile $L_1$,$L_2$...$L_n$ oder Betätigungselemente des Reglers 1 an die Fahrzeugbatterie mit der Spannung $U_B$ bzw. an die Stromversorgung (Kl. 30) angeschlossen sind. Das Stromversorgungsrelais Rel wird hier über einen Kontakt des Zündschalters IGN eines Kraftfahrzeuges an die Batterie bzw. an die Stromversorgung des Fahrzeugs angeschaltet. Das Einschalten der Zündung setzt folglich die Funktion der erfindungsgemäßen Schaltungsanordnung 3, die im folgenden anhand des Ablaufdiagrammes bzw. Flußdiagrammes nach Fig. 2 erläutert wird, in Gang. Die Spannung über dem Schalttransistor $T_R$ und über einem Widerstand R im Masseanschluß des Transistors ist mit $U_1$ bezeichnet.

Das Einschalten der Zündung, symbolisiert durch die Grenzstelle 5 (IGN), startet den in Fig. 2 dargestellten Vorgang. Eine bestimmte Spannung IGN liegt am Eingang $E_1$ nur an, wenn das Relais Rel ordnungsgemäß montiert ist, wenn der Transistor $T_R$ im Stromversorgungsweg dieses Stromversorgungsrelais Rel nicht angesteuert wird und nicht durchgeschlagen ist und wenn schließlich der Zündschalter IGN geschlossen wurde. Ist also die Bedingung $U = U_1$ erfüllt, siehe Verzweigungssysmbol 6 in Fig. 2, folgt Schritt 7. Ist die Bedingung nicht erfüllt (N) wird der Zyklus, der zum Einschalten des Reglers 1 führen sollte, beendet (AUS).

Zu diesem Zeitpunkt muß der Arbeitskontakt a des Stromversorgungsrelais Rel noch geöffnet sein. Für die Spannung am Eingang $V_{Mon}$ gilt folglich $V_{Mon} = 0$. Ist diese Bedingung erfüllt (J), wird nun, symbolisiert durch die Operation 8, der Transistor $T_R$ von dem Überwachungsschaltkreis 4 angesteuert und dadurch das Stromversorgungsrelais Rel erregt. Nun gilt Rel = 1. Ein Freigabesignal Enable wird jetzt noch nicht, sondern erst dann ausgegeben, wenn tatsächlich über den geschlossenen Kontakt a des Stromversorgungsrelais Rel Batteriespannung $U_B$ zur Klemme bzw. zum Eingang $V_{Mon}$ des Überwachungsschaltkreises 4 gelangt. Da bis zum Schließen des Relaiskontaktes a eine Verzögerungszeit von einigen Millisekunden auftreten kann, wird in der Stufe 9, solange die Bedingung $V_{Mon} = 1$ noch nicht erfüllt ist (N), die Frage wiederholt bzw. eine Schleife gebildet. Erst nach Erfüllung der Bedingung $V_{Mon} = 1$ wird in dem Schritt 10 das Freigabesignal Enable, d.h. EN = 1, ausgegeben und dadurch über einen nicht dargestellten Weg der Regler 1 in Funktion gesetzt.

Außerdem wird, sobald die Bedingung $V_{Mon}$ = 1 erfüllt ist und das Freigabesignal EN = 1 ansteht, der Eingang des Überwachungsschaltkreises 4, der das Schließen des Relaiskontaktes a überwachte, nunmehr auf Spannungsüberwachung SÜ umgeschaltet. Im vorliegenden Fall reagiert die Spannungsüberwachung SÜ nur auf Überspannungen. Wird zu irgendeinem Zeitpunkt Überspannung gemeldet, d.h. SÜ = 1, symbolisiert durch J im Ausgang der Verzweigung 12, werden über die Grenzstelle 13 (AUS) das Stromversorgungsrelais Rel und damit der Regler 1 ausgeschaltet. Eine zu hohe Versorgungsspannung könnte nämlich fehlerhafte Funktionen des Reglers auslösen.

Ist der Relaiskontakt a geschlossen (Rel = 1, $V_{Mon}$ = 1), wird außerdem über den Eingang E1 die Höhe der Spannung über dem Transistor $T_R$ und dem Widerstand R, also die Spannung $U_1$ überwacht. Übersteigt $U_1$ einen oberen Grenzwert $U_{max}$, deutet dies auf einen Fehler hin, weshalb auch in diesem Fall die Regelung abgeschaltet wird.

Neben den soeben geschilderten Vorgängen werden von dem Überwachungsschaltkreis 4 noch weitere Schaltkreise des Reglers 1 überwacht. Dies ist in Fig. 1 u.a. durch die Eingangssignale WD1,WD2 angedeutet, bei denen es sich um Wechselsignale handelt, die von sogen. "watch-dog"-Schaltkreisen stammen. Ein Ausbleiben dieser Signale oder ein Abweichen von der vorgegebenen Frequenz deutet auf einen Fehler hin.

Außerdem kann durch ein Reset-Signal, das dem Schaltkreis 4 über einen Reset-Eingang zugeführt wird, das Einschalten des Reglers 1 verhindert oder der Regler wieder abeschaltet werden. Beispielsweise kann das Reset-Signal von der korrekten Höhe einer Versorgungsspannung abhängig sein. Jede Fehlermeldung über einen der beschriebenen oder der nur angedeuteten Eingänge (Reset, WD1,WD2 etc.) veranlaßt den Überwachungsschaltkreis 4 zur Löschung des Freigabesignals Enable und außerdem zur Sperrung des Transistors $T_R$, was wiederum das Abschalten des Stromversorgungsrelais Rel und das Öffnen des Arbeitskontaktes a zur Folge hat. Über diese beiden Wege, nämlich durch Löschen des Freigabesignals Enable und Abschalten der Stromversorgung, wird folglich redundant der Regler 1 außer Funktion gesetzt. Die Betätigungselemente bzw. Magnetventile, deren Spulen mit $L_1,L_2...L_n$ symbolisiert sind, bleiben dann in ihrer Ruhelage, in der zumindest eine ungeregelte Bremsung gewährleistet ist.

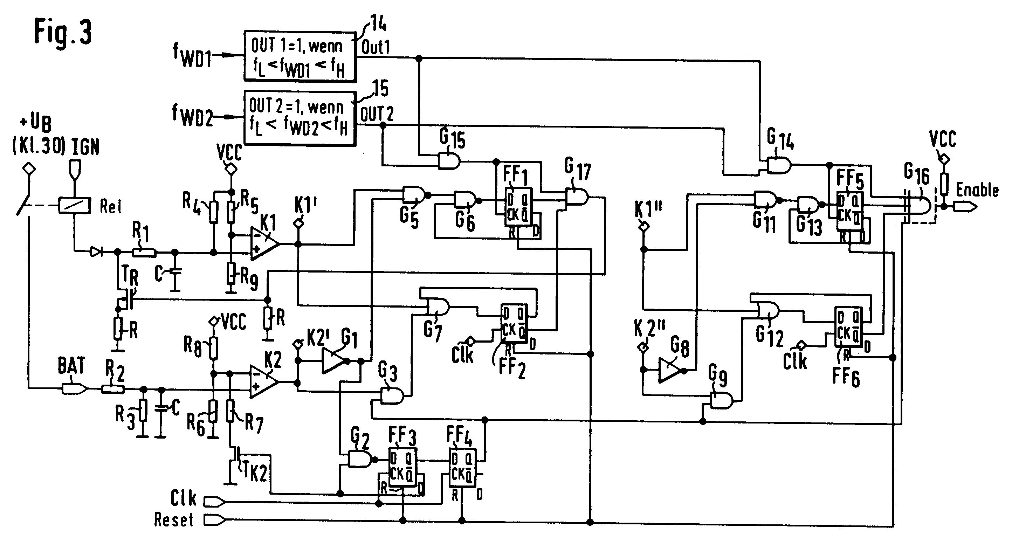

Fig. 3 zeigt ein Ausführungsbeispiel der in Fig. 1 dargestellten und beschriebenen Schaltungsanordnung 3 nach der Erfindung. Gleiche Bauteile und gleiche Anschlüsse wurden in Fig. 1 und 3 mit der gleichen Bezeichnung bzw. mit der gleichen Bezugsziffer versehen. Dies gilt u.a. für das Stromversorgungsrelais Rel, die Anschlüsse IGN und Klemme 30, den Stromversorgungskontakt a und den Stromversorgungsschalttransistor $T_R$.

Das Flußdiagramm nach Fig. 2 gilt natürlich auch für die Schaltung nach Fig. 3. Nach dem Einschalten der Zündung IGN werden durch ein Reset-Signal alle Flip-Flops, nämlich die Flip-Flops $FF_1$ - $FF_6$ des in Fig. 3 dargestellten Schaltkreises rückgesetzt. Dieses Reset-Signal wird von der Elektronik bei jedem Einschalten der Zündung IGN erzeugt und wird in Form eines Pulses mit einer Dauer von einigen Millisekunden ausgegeben. Die Dauer dieses Reset-Pulses genügt, um Komparatoren K1 und K2 in einen stabilen Schaltzustand zu versetzen; Einschwingvorgänge sind nach dieser Zeitspanne abgeklungen. Nach Beendigung des Reset-Pulses läuft der anhand des Flußdiagramms (Fig. 2) beschriebene Einschaltzyklus ab.

An den Eingängen $f_{WD1}$ und $f_{WD2}$ liegt jeweils ein Wechselsignal an, das in bekannter Weise von "watch-dog"-Schaltkreisen der hier nicht dargestellten Reglerelektronik erzeugt werden, und deren Aussetzen oder Abweichen von der vorgegebenen Frequenz auf einen Fehler in der Reglerelektronik hinweist. Folglich wird mit Fensterkomparatoren 14,15 überprüft, ob die Frequenz des Eingangssignals $f_{WD1}$ bzw. $f_{WD2}$ innerhalb eines oberen und unteren Grenzwertes $f_H$ bzw. $f_L$ liegt. Sind die Bedingungen erfüllt, gilt für die Ausgangssignale der Komparatoren 14 bzw. 15: OUT1 = 1, OUT2 = 1. Die Pegel am Ausgang bzw. die Schaltzustände der Komparatoren K1,K2 werden, sobald am Ausgang eines UND-Gatters $G_{15}$ eine positive Flanke auftritt, im Flip-Flop 1 gespeichert. Der für die Spannungen am Eingang der Komparatoren K1,K2 gilt: Q-Ausgang Q des Flip-Flops $FF_1$ wird "1", wenn

(1.) Spannung an K1+ > Spannung an K1- und
(2.) Spannung an K2+ < Spannung an K2- . Es ist $Q_{FF1}$ = 0, wenn eine der beiden vorgenannten Bedingungen (1.) oder (2.) nicht erfüllt ist. Dieser Zustand ist nur durch das Abschalten der Betriebsspannung zu löschen.

Die Referenzspannung am Eingang des Komparators K1 wird durch einen Spannungsteiler $R_5$ und $R_9$ eingestellt (hier: $U_{Ref}$ = 2,5 V). Wie anhand der Fig. 1 beschrieben, wird mit Hilfe des Komparators K1, dessen Eingänge über den Widerstand $R_1$ mit der Relaiswicklung Rel und dem Zündschalterkontakt IGN verbunden sind, der Zustand des Schalttransistors $T_R$ überwacht. Zum Zeitpunkt des Einschaltens bzw. Betätigung des Zündschalters IGN ist der Transistor $T_R$ zunächst gesperrt.

Die Referenzspannung an dem Komparator K2 wird durch die Widerstände $R_8,R_6$ und $R_7$ bestimmt, da der Transistor $T_{K2}$ nach einem Reset-Vorgang durch den Ausgang Q des Flip-Flops $FF_3$

angesteuert wird; im vorliegenden Fall gilt $U_{Ref1}$ = 1,5 V. Wie zuvor erläutert, dient der Komparator K2 vor dem Einschalten des Stromversorgungsrelais Rel und Schließen des Stromversorgungskontaktes a zur Überwachung der Trennstellung dieses Kontaktes a; auf diese Weise wird ein "Kleben" des Relaiskontaktes a rechtzeitig erkannt.

Sind im vorliegenden Fall die Einschaltbedingungen

$U_{Prüf}$ > 2,5V ($U_{Prüf}$ ist die Spannung am Eingang des Komparators K1)

$$U_B \times \frac{R_3}{R_2 + R_3} < 1,5$$

erfüllt, nimmt der Schaltzustand am Ausgang Q des Flip-Flops $FF_1$ den Wert 1 an. Dieser Zustand ist nur durch ein Reset-Signal zu verändern. Da der Ausgang des UND-Gatters $G_{15}$ bereits 1 ist und weiterhin $Q_{FF2}$ = 1 gilt, werden über das UND-Gatter $G_{17}$ der Transistor $T_R$ und damit das Stromversorgungsrelais eingeschaltet.

Die Klemmen K1' mit K1'' und K2' mit K2'' sind galvanisch verbunden.

Der Schaltzustand an dem Flip-Flop $FF_5$ entspricht daher dem Schaltzustand von $FF_1$, jedoch ist der Signalzustand am Ausgang Q des Flip-Flops $FF_4$ zunächst noch 0. Daher bleibt der Ausgang des UND-Gatters $G_{16}$ weiterhin auf 0.

Nach dem Schließen des Arbeitskontaktes a des Stromversorgungsrelais Rel steigt die Spannung am Eingang des Komparators K2 über den Schwellwert, der hier 1,5 V beträgt, an. Das Ausgangssignal des Komparators K2, wird "1". Da das Gatter $G_3$ über das Flip-Flop $FF_4$ noch gesperrt ist, wird dieser Signalzustand "1" am Ausgang des Komparators K2 nur über das Gatter $G_2$ auf den Eingang des Flip-Flops $FF_3$ übertragen. Mit der nächsten positiven Flanke des clock-Signals (CLK) wird der Signalzustand am Ausgang von K2 vom Flip-Flop $FF_3$ übernommen. Ist der Signalzustand am Ausgang des Komparators K2 "1", wird dieser Zustand bis zum nächsten Reset-Signal gespeichert. Gleichzeitig wird der Transistor $T_{K2}$ ausgeschaltet, der Stromzweig des Widerstandes $R_7$ hochohmig und folglich die Referenzspannung am Eingang des Komparators K2 erhöht, hier auf 3,5 V. Dadurch wird das Signal am Ausgang des Komparators K2 wieder 0. Dies bedeutet eine Umschaltung auf Überspannungserkennung, was in Fig. 1 durch die Umschaltung des Eingangs des Überwachungsschaltkreises 4 von "$V_{Mon}$"auf "SÜ" symbolisiert ist. Nach dem nächsten clock-Puls wird der Ausgang Q des Flip-Flops $FF_4$ signalführend, d.h. "1", und dadurch das Freigabesignal Enable über das UND-Gatter 16 freigegeben. Außerdem wird mit dieser Flanke des clock-Pulses auch der Signalzustand am Ausgang des Komparators K2 auf das Flip-Flop $FF_2$ und $FF_6$ durchgeschaltet.

Wird über den Spannungsteiler $R_2, R_3$ am Eingang des Komparators K2 die Grenzspannung, hier 3,5 V, überschritten, was in der Praxis einer Batteriespannung $U_B$ über 18 V entspricht, führt dies über die Gatter $G_3$ und $G_7$ zum Speichern eines Fehlers im Flip-Flop $FF_2$. Der Ausgang Q des Flip-Flops $FF_2$ wird 0. Dies hat ein Sperren des Transistors $T_R$ und dadurch ein Abschalten des Stromversorgungsrelais Rel zur Folge. Gleichzeitig wird über das UND-Gatter $G_9$, das ODER-Gatter $G_{12}$ und den Flip-Flop $FF_6$ das Freigabesignal Enable gelöscht.

Das kurze Einschalten des Komparators K2 in diesem beschriebenen Vorgang ist nötig, um die Funktion dieses Komparators zu überprüfen, da im Normalbetrieb - solange kein Fehler auftritt - die Überspannungsabschaltung nicht anspricht. Ein Fehler in der Überspannungsabschaltung könnte folglich unerkannt bleiben.

Durch die gleichzeitige Ansteuerung der Stromversorgungsrelais-Abschaltung und der Löschung des Freigabesignals wird die für sicherheitskritische Regler erforderliche Redundanz bei der Reaktion der erfindungsgemäßen Schaltungsanordnung auf Defekte oder Fehlfunktionen erreicht.

**Patentansprüche**

1. Schaltungsanordnung für einen elektronischen Regler, insbesondere für den Regler (1) einer Bremsanlage mit elektronischer Blockierschutz- und/oder Antriebsschlupfregelung, mit einem Überwachungsschaltkreis (4), der beim Erkennen eines Defektes, einer Fehlfunktion, fehlerhafter Stromversorgung oder dergl., von dem Regler (1) angesteuerte Betätigungselemente, wie Stellglieder oder Magnetventile ($L_{1-n}$) einer elektronisch geregelten Bremsanlage, in ihrer Ruhelage hält oder in die Ruhelage zurückstellt, wobei beim Einschalten des Reglers (1) zur Stromversorgung der Betätigungselemente ein Relaiskontakt (a) eines Stromversorgungsrelais (Rel) geschlossen wird, dadurch **gekennzeichnet**, daß der Überwachungsschaltkreis (4) beim Einschalten des Reglers (1) vor dem Schließen des Relaiskontaktes (a) zunächst den Anschluß des Relais (Rel) an die Stromzuführung (IGN) und die Offen- bzw. Trennstellung des Relaiskontaktes (a) überprüft, anschließend das Stromversorgungsrelais (Rel) ansteuert und nach dem Überprüfen der über den geschlossenen Relaiskontakt (a) zugeführten Versorgungsspannung ($U_B$) ein Freigabesignal (Enable) für den Regler (1) und/oder für die Ansteuerung der Betätigungselemente ($L_1$, $L_2$, $L_n$) auslöst.

2. Schaltungsanordnung nach Anspruch 1, dadurch **gekennzeichnet**, daß der Überwachungsschaltkreis (4) einen Transistor ($T_R$) ansteuert, über den das Stromversorgungsrelais (Rel) einschaltbar ist, und daß nach dem Einschalten des Reglers (1) zunächst durch Sperrung der Transistoransteuerung die Sperrfunktion des Transistors ($T_R$) überprüft wird.

3. Schaltungsanordnung nach Anspruch 1 oder 2, dadurch **gekennzeichnet**, daß der Überwachungsschaltkreis (4) vor oder nach dem Auslösen des Freigabesignals (Enable) die Höhe der über den Relaiskontakt (a) zugeführten Versorgungsspannung ($U_B$) überprüft sowie das Stromversorgungsrelais (Rel) abschaltet und/oder das Freigabesignal Enable) löscht, sobald die Versorgungsspannung ($U_B$) einen oberen oder einen unteren Grenzwert über- bzw. unterschreitet.

4. Schaltungsanordnung nach Anspruch 1 oder 2, dadurch **gekennzeichnet**, daß der Überwachungsschaltkreis (4) nach dem Auslösen des Freigabesignals (Enable) auf Spannungsüberwachung (SÜ) umschaltet und das Stromversorgungsrelais (Rel) wieder abschaltet, sobald die Versorgungsspannung ($U_B$) einen oberen Grenzwert überschreitet.

5. Schaltungsanordnung nach einem oder mehreren der Ansprüche 1 bis 4, dadurch **gekennzeichnet**, daß der Überwachungsschaltkreis (4) gleichzeitig weitere Schaltkreise des Reglers überwacht, die bei ordnungsgemäßer Funktion bestimmte Dauersignale (Reset) oder Wechselsignale (WD1, WD2) vorgegebener Frequenz abgeben, und bei einer Störung das Stromversorgungsrelais (Rel) abschaltet und/oder das Freigabesignal (Enable) löscht.

6. Schaltungsanordnung nach Anspruch 5, dadurch **gekennzeichnet**, daß der Überwachungsschaltkreis (4) die in Form von Wechselsignalen bestimmter Frequenz vorliegenden Ausgangssignale (WD1, WD2) sogen. "watchdog"-Schaltkreise überwacht.

7. Schaltungsanordnung nach einem oder mehreren der Ansprüche 1 bis 6, dadurch **gekennzeichnet**, daß das Stromversorgungsrelais (Rel) durch Ansteuern eines Transistors ($T_R$) einschaltbar ist und daß der Überwachungsschaltkreis (4) anspricht, wenn nach dem Ansteuern des Transistors ($T_R$) die Spannung über diesem Transistor einen vorgegebenen Maximalwert überschreitet.

8. Schaltungsanordnung nach Anspruch 7, dadurch **gekennzeichnet**, daß dem Transistor ($T_R$) ein ohmscher Widerstand (R) in Reihe geschaltet ist und daß der Überwachungsschaltkreis (4) anspricht, wenn die über dem Transistor ($T_R$) und über dem Widerstand abfallende Spannung ($U_1$) einen vorgegebenen Maximalwert überschreitet.

## Claims

1. A circuit configuration for an electronic controller, in particular, for the controller (1) of a brake system having an electronic anti-locking control and/or a traction slip control, the circuit configuration including a monitoring circuit (4) which, upon detection of a defective condition, malfunction, defective power supply or the like, will either maintain actuator elements excited by the controller (1) in their initial positions or restore actuator elements excited by the controller to their initial positions, which actuator elements can be set elements or magnetic valves ($L_{1-n}$) of an electronically controlled brake system, which are connected to a relay contact (a) of a power supply relay (Rel) that closes during actuation of the controller (1) for the power supply of the actuator elements,
**characterized** in that the monitoring circuit (4), during activation of the controller (1), before closing of the relay contact (a), at first checks the connection of the relay (Rel) to the power supply (IGN) and the opening and separating position, respectively, of the relay contact (a), subsequently, activates the power supply relay (Rel) and, after the check of the supply voltage ($U_B$) supplied through the closed relay contact (a), generates a release signal (Enable) for the controller (1) and/or for the activation of the actuator elements ($L_1$, $L_2$, $L_n$).

2. A circuit configuration as claimed in claim 1, **characterized** in that the monitoring circuit (4) excites a transistor ($T_R$), through which the power supply relay (Rel) can be activated, and in that after activation of the controller (1), first the blocking function of the transistor ($T_R$) is checked by blocking the activation of the transistor.

3. A circuit configuration as calimed in claim 1 or claim 2,
**characterized** in that the monitoring circuit (4) before or after the generation of the release signal (Enable) checks the level of the supply voltage ($U_B$) supplied through the relay contact (a), and deactivates the power supply relay (Rel) and/or clears the release signal (Enable) as soon as the supply voltage ($U_B$) exceeds an upper threshold value or falls below a lower threshold value.

4. A circuit configuration as claimed in claim 1 or claim 2,
   **characterized** in that the monitoring circuit (4) after generation of the release signal (Enable) switches over to voltage monitoring (SÜ) and, again, deactivates the power supply relay (Rel) as soon as the supply voltage ($U_B$) exceeds an upper threshold value.

5. A circuit configuration as claimed in any one or more of claims 1 to 4,
   **characterized** in that the monitoring circuit (4), simultaneously, monitors additional circuits of the controller which generate, in case of proper operation, predetermined permanent signals (Reset) or alternating signals (WD1, WD2) of a predetermined frequency and, in the event of malfunction, deactivate the power supply relay (Rel) and/or clear the release signal (Enable).

6. A circuit configuration as claimed in claim 5,
   **characterized** in that the monitoring circuit (4) monitors the output signals (WD1, WD2) available in the form of alternating signals of a predetermined frequency and generated by so-called "watch-dog" circuits.

7. A circuit configuration as claimed in any one or more of claims 1 to 6,
   **characterized** in that the power supply relay (Rel) can be activated by exciting a transistor ($T_R$), and in that the monitoring circuit (4) responds once the voltage across the transistor ($T_R$), after excitation of the transistor, exceeds a predetermined maximum value.

8. A circuit configuration as claimed in claim 7,
   **characterized** in that an ohmic resistance (R) is series connected with the transistor ($T_R$), and in that the monitoring circuit (4) responds once the voltage ($U_1$) dropping across the transistor ($T_R$) and across the resistance exceeds a predetermined maximum value.

**Revendications**

1. Montage pour un régulateur électronique, notamment pour le régulateur (1) d'une installation de freinage comportant un système électronique de régulation d'antiblocage et/ou de régulation de glissement d'entraînement, comportant un circuit de contrôle (4), qui, lors de l'identification d'un défaut, d'une fonction erronée, d'une alimentation erronée en courant ou analogue, maintient des éléments d'actionnement commandés par le régulateur (1), comme par exemple des circuits de réglage ou des soupapes magnétiques ($L_{1-n}$), d'une installation de freinage à régulation électronique, dans leur position de repos ou les ramène dans la position de repos, auquel cas lors de l'activation du régulateur (1), un contact (a) d'un relais d'alimentation en courant (Rel) est fermé pour l'alimentation en courant des éléments d'actionnement, caractérisé en ce que, lors de l'activation du régulateur (1) et avant la fermeture du contact (a) du relais, le circuit de contrôle (4) contrôle tout d'abord le raccordement du relais (Rel) à l'alimentation en courant (IGN) et la position d'ouverture ou de coupure du contact (a) du relais, commande ensuite le relais d'alimentation en courant (Rel) et, après le contrôle de la tension d'alimentation ($U_B$) envoyée par l'intermédiaire du contact (a) fermé du relais, déclenche un signal de libération (ENABLE) pour le régulateur (1) et/ou pour la commande des éléments d'actionnement ($L_1$, $L_2$, $L_n$).

2. Montage suivant la revendication 1, caractérisé par le fait que le circuit de contrôle (4) commande un transistor ($T_R$), au moyen duquel le relais d'alimentation en courant (Rel) peut être activé, et qu'après l'activation du régulateur (1), la fonction de blocage du transistor ($T_R$) est contrôlée tout d'abord par blocage de la commande du transistor.

3. Montage suivant la revendication 1 ou 2, caractérisé en ce que le circuit de contrôle (4) contrôle avant ou après le déclenchement du signal de libération (Enable), l'amplitude de la tension d'alimentation ($U_B$) envoyée au moyen du contact (a) du relais et débranche le relais d'alimentation (Rel) et/ou supprime le signal de libération (Enable) dès que la tension d'alimentation ($U_B$) passe au-dessus ou au-dessous d'une valeur limite supérieure ou d'une valeur limite inférieure.

4. Montage suivant la revendication 1 ou 2, caractérisé en ce qu'après le déclenchement du signal de libération (Enable), le circuit de contrôle (4) est commuté sur l'unité de contrôle de tension (SÜ) et que le relais d'alimentation en courant (Rel) est à nouveau débranché dès que la tension ($U_B$) dépasse une valeur limite supérieure.

5. Montage selon une ou plusieurs des revendications 1 à 4, caractérisé en ce que le circuit de contrôle (4) contrôle simultanément d'autre circuits du régulateur, qui, lorsque le fonctionnement est correct, délivrent des signaux permanents déterminés (Reset) et des signaux alternatifs (WD1, WD2) possédant une fréquence prédéterminée et, dans le cas où une perturbation du relais d'alimentation en courant (Rel), débranche le relais d'alimentation en courant (Rel) et/ou supprime le signal de libération (Enable).

6. Montage suivant la revendication 5, caractérisé en ce que le circuit de contrôle (4) contrôle les signaux de sortie (WD1, WD2), qui sont présents sous la forme de signaux alternatifs ayant une fréquence déterminée, produits par ce qu'on appelle des circuits "chien de garde".

7. Montage selon une ou plusieurs des revendications 1 à 6, caractérisé en ce que le relais d'alimentation en courant (Rel) peut être fermé par commande d'un transistor ($T_R$) et que le circuit de contrôle (4) répond lorsqu'après la commande du transistor ($T_R$), la tension dépasse, par l'intermédiaire de ce transistor, une valeur maximale prédéterminée.

8. Montage suivant la revendication 7, caractérisé en ce qu'une résistance ohmique (R) est branchée en série avec le transistor ($T_R$) et que le circuit de contrôle (4) répond lorsque la tension ($U_1$), qui chute dans le transistor ($T_R$) et dans la résistance, dépasse une valeur maximale prédéterminée.

Fig. 1

# Fig. 2

IGN — 5

U = $U_1$ — 6
N → AUS
J

$V_{Mon}$ = 0 — 7
N → AUS
J

Rel → 1 — 8

$V_{Mon}$ = 1 — 9
N
J

EN = 1 — 10

Umschalten
$V_{Mon}$ → SÜ — 11

SÜ = 1 — 12
N
J

AUS — 13

Fig. 3

11